# EUROPEAN PATENT APPLICATION

(11) **EP 2 257 052 A1**
(43) Date of publication of application: **01.12.2010**
(21) Application number: 09180765.1
(22) Date of filing: 24.12.2009
(51) Int. Cl.: H04N 5/445, G06F 3/048, G06F 3/033

(54) **Image display device and operation method therefor**

(30) Priority: 29.05.2009 KR 20090047658
(71) Applicant: LG ELECTRONICS INC., Yeongdeungpo-gu Seoul 150-721 (KR)
(72) Inventor: Bae, Hae Jin, Kyungki-do (KR); Lee, Jae Kyung, Kyungki-do (KR); Lee, Kun Sik, Kyungki-do (KR); Kim, Gyu Seung, Kyungki-do (KR)
(74) Representative: Cabinet Plasseraud

(57) **Abstract**

An image display device and an operation method thereof are provided. This may include displaying an image on a display, displaying a pointer that moves in correspondence with an operation of a pointing device on the display, and displaying an object for receiving a command or representing image display device-related information on the display when the pointer moves to a predetermined area of the display.

## Description

### BACKGROUND

### 1. Field

Embodiments of the present invention may relate to an image display device and an operation method thereof. More particularly, embodiments of the present invention may relate to an image display device being controllable by a pointing device, operating in correspondence with operation of the pointing device, and providing a user-friendly user interface.

2. **Background**

An image display device may display video viewable to a user. The user may view broadcast programs using the image display device. The image display device may display a user-selected broadcast program on a display based on broadcast signals received from broadcasting stations. Broadcasting may be undergoing a transition from analog to digital all over the world.

Digital broadcasting may refer to broadcasting digital video and audio signals. Compared to analog broadcasting, digital broadcasting may be characterized by less data loss due to its robustness against external noise, effectiveness in error correction, high resolution, and/or clean and clear images. In addition, digital broadcasting may enable interactive services, unlike analog broadcasting.

The transition from analog broadcasting to digital broadcasting and increasing user demands may be a driving force behind an increase in a number of broadcasting channels. Thus, it may take more time for a user to select an intended channel from among a plurality of channels. Additionally, channel switching may take a long time to display images of selected channels.

As video signals displayable on the image display device increase in type and number and more services are accessible through the image display device, a remote controller may have more buttons (or keys) to operate the image display device. A complex remote controller may cause inconvenience to the user. Accordingly, many techniques have been developed, including a user interface for efficiently controlling an image display device and increasing user convenience.

**BRIEF DESCRIPTION OF THE DRAWINGS**

Arrangements and embodiments may be described in detail with reference to the following drawings in which like reference numerals refer to like elements and wherein:

FIG. 1 is a block diagram of an image display device according to an exemplary embodiment of the present invention;

FIGs. 2A and 2B are frontal perspective views of the image display device and a 3D remote controller according to an exemplary embodiment of the present invention;

FIG. 3 is a block diagram of a 3D remote controller according to an exemplary embodiment of the present invention;

FIGs. 4A, 4B and 4C illustrate screens having images displayed in an image display device according to an exemplary embodiment of the present invention;

FIGs. 5 and 6 are flowcharts illustrating methods for operating an image display device according to exemplary embodiments of the present invention; and

FIGs. 7A to 12B are views referred to a method for operating an image display device according to exemplary embodiments of the present invention.

**DETAILED DESCRIPTION**

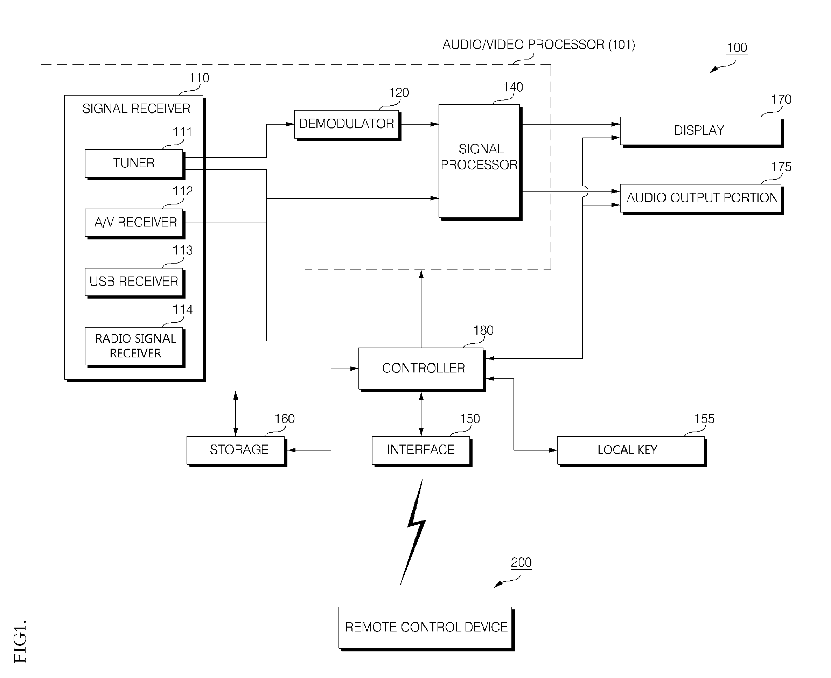

FIG. 1 is a block diagram of an image display device according to an exemplary embodiment of the present invention. Other embodiments and configurations are also within the scope of the present invention.

As shown in FIG. 1, an image display device 100 may include an audio/video processor 101, an interface 150, a local key 155, a storage 160 (or memory), a display 170, an audio output portion 175 and a controller 180. As one example, the image display device may be a monitor or a television.

The audio/video processor 101 may process a received audio or video signal so as to output audio or video to the audio output portion 175 or the display 170. The audio/video processor 101 may include a signal receiver 110, a demodulator 120 and a signal processor 140. The signal receiver 110 may have a tuner 111, an Audio/Visual (A/V) receiver 112, a Universal Serial Bus (USB) receiver 113 and a radio signal receiver 114.

The tuner 111 may select an RF broadcast signal of a user-selected channel from among a plurality of RF broadcast signals received through an antenna and downconvert the selected RF broadcast signal to an Intermediate Frequency (IF) signal or a baseband audio or video signal. For example, if the selected RF broadcast signal is a digital broadcast signal, the tuner 111 may downconvert the RF broadcast signal to a Digital IF (DIF) signal. If the selected RF broadcast signal is an analog broadcast signal, the tuner 111 may downconvert the RF broadcast signal to an analog baseband video or audio signal (Composite Video Banking Sync (CVBS)/Sound Intermediate Frequency (SIF)). That is, the tuner 111 may process a digital or analog broadcast signal. The analog baseband video or audio signal (CVBS/SIF) may be provided directly to the signal processor 140.

The tuner 111 may receive a single-carrier RF broadcast signal based on Advanced Television System Committee (ATSC) or a multi-carrier RF broadcast signal based on Digital Video Broadcasting (DVB).

The image display device 100 may also include two or more tuners. Like a first tuner, a second tuner may select an RF broadcast signal of a user-selected channel from among RF broadcast signals received through the antenna and downconvert the selected RF broadcast signal to an IF signal or a baseband video or audio signal.

The second tuner may sequentially select RF signals of all broadcast channels that have been stored by a channel memory function from among received RF broadcast signals and downconvert the selected RF signals to IF signals or baseband video or audio signals. The second tuner may periodically perform the downconversion of the RF signals of all broadcast channels. The image display device 100 may provide video signals of a plurality of channels downconverted by the second tuner in thumbnails, while displaying the video of a broadcast signal downconverted by the first tuner. The first tuner may downconvert a user-selected main RF broadcast signal to an IF signal or a baseband video or audio signal, and the second tuner may select all RF broadcast signals except for the main RF broadcast signal sequentially/periodically and downconvert the selected RF broadcast signals to IF signals or baseband video or audio signals.

The demodulator 120 may demodulate the DIF signal received from the tuner 111. For example, if the DIF signal is an ATSC signal, the demodulator 120 may demodulate the DIF signal by 8-Vestigal Side Band (8-VSB). In another example, if the DIF signal is a DVB signal, the demodulator 120 may demodulate the DIF signal by Coded Orthogonal Frequency Division Multiple Access (COFDMA) demodulation.

The demodulator 120 may further perform channel decoding. For the channel decoding, the demodulator 120 may include a Trellis decoder, a deinterleaver and a Reed Solomon decoder for Trellis decoding, deinterleaving and Reed Solomon decoding, respectively.

After the demodulation and channel decoding, the demodulator 120 may output a Transport Stream (TS) signal. A video signal, an audio signal or a data signal may be multiplexed in the TS signal. For example, the TS signal may be a Moving Picture Experts Group-2 (MPEG-2) TS having an MPEG-2 video signal and a Dolby AC-3 audio signal multiplexed. More specifically, the MPEG-2 TS may include a 4-byte header and 184-byte payload.

The TS signal may be provided to the signal processor 140. The signal processor 140 may demultiplex and process the TS signal and output a video signal to the display 170 and an audio signal to the audio output portion 175.

An image display device having at least two tuners may have a similar number of demodulators. Additionally, a demodulator may be separately provided for each of ATSC and DVB.

The signal receiver 110 may connect the image display device 100 to an external device. The external device may be an audio or video output device such as a DVD player, a radio, an audio player, an MP3 player, a camera, a camcorder, a game player, etc. The signal receiver 110 may provide an audio, video or data signal received from the external device to the signal processor 140 for processing the video and audio signals in the image display device 100.

In the signal receiver 110, the AN receiver 112 may include a CVBS port, a component port, a S-video port (analog), a Digital Visual Interface (DVI) port, a High Definition Multimedia Interface (HDMI) port, a Red, Green, Blue (RGB) port, a D-SUB port, an Institute of Electrical and Electronics Engineers (IEEE) 1394 port, an Sony/Phillips Digital InterFace (SPDIF) port, a Liquid HD port, etc. in order to provide audio and video signals received from the external device to the image display device 100. Analog signals received through the CVBS port and the S-video port may be provided to the signal processor 140 after analog-to-digital conversion. Digital signals received through the other input ports may be provided to the signal processor 140 without analog-to-digital conversion.

The USB receiver 113 may receive audio and video signals through the USB port.

The radio signal receiver 114 may connect the image display device 100 to a wireless network. The image display device 100 may access a wireless Internet through the radio signal receiver 114. For connection to the wireless Internet, a communication standard may be used, such as Wireless Local Area Network (WLAN) (Wi-Fi), Wireless Broadband (WiBro), Worldwide Interoperability for Microwave Access (Wimax), High Speed Downlink Packet Access (HSDPA), etc. Further, the radio signal receiver 114 may conduct short-range communications with another electronic device. For example, the radio signal receiver 114 may be networked to another electronic device by a communication standard like Bluetooth, Radio Frequency Identification (RFID), InfraRed Data Association (IrDA), Ultra Wideband (UWB), ZigBee, etc.

The signal receiver 110 may couple the image display device 100 to a set-top box (or similar type of device). For example, if the set-top box operates for Internet Protocol (IP) TV, the signal receiver 110 may transmit an audio, video and/or data signal received from the IPTV set-top box to the signal processor 140 and a processed signal received from the signal processor 140 to the IP TV set-top box.

The signal processor 140 may demultiplex a received TS signal, (e.g. an MPEG-2 TS) into an audio signal, a video signal and a data signal. The signal processor 140 may also process the demultiplexed video signal. For example, if the demultiplexed video signal was coded, the signal processor 140 may decode the video signal. More specifically, if the demultiplexed video signal is an MPEG-2 coded video signal, an MPEG-2 decoder may decode the video signal. If the demultiplexed video signal was coded in compliance with H.264 for Digital Multimedia Broadcasting (DMB) and/or Digital Video Broadcasting-Handheld (DVB-H), an H.264 decoder may decode the video signal.

The signal processor 140 may control brightness, tint, and/or color for the video signal. The video signal processed by the signal processor 140 may be displayed on the display 170.

The signal processor 140 may also process the demultiplexed audio signal. For example, if the demultiplexed audio signal was coded, the signal processor 140 may decode the audio signal. More specifically, if the demultiplexed audio signal is an MPEG-2 coded audio signal, an MPEG-2 decoder may decode the audio signal. If the demultiplexed audio signal was coded in compliance with MPEG 4 Bit Sliced Arithmetic Coding (BSAC) for terrestrial DMB, an MPEG 4 decoder may decode the audio signal. If the demultiplexed audio signal was coded in compliance with MPEG 2 Advanced Audio Codec (AAC) for satellite DMB or DVB-H, an AAC decoder may decode the audio signal.

The signal processor 140 may control base, treble, and/or volume for the audio signal. The audio signal processed by the signal processor 140 may be provided to the audio output portion 175.

The signal processor 140 may also process the demultiplexed data signal. For example, if the demultiplexed data signal was coded, the signal processor 140 may decode the data signal. The coded data signal may be Electronic Program Guide (EPG) information including broadcasting information such as starts, ends, etc. of broadcast programs of each channel. For example, the EPG information may be ATSC-Program and System Information Protocol (ATSC-PSIP) information in case of ATSC. For DVB, the EPG information may include DVB-Service Information (DVB-SI). The ATSC-PSIP information or DVB-SI may be included in the 4-byte header of the above-described TS (i.e., MPEG-2 TS).

The signal processor 140 may perform an On-Screen Display (OSD) function. More specifically, the signal processor 140 may display information graphically or in text on the display 170 based on at least one of the processed video and data signals and a user input signal received through a remote control device 200. The remote control device 200 may also be referred to as a pointing device.

The storage 160 (or memory) may store programs for signal processing and control operations of the controller 180 and store processed video, audio and/or data signals. The storage 160 may temporarily store video, audio and/or data signals received at the signal receiver 110.

The storage 160 may include a storage medium of at least one type of flash memory, hard disk, multimedia card micro type, card-type memory (e.g. Secure Digital (SD) or eXtreme Digital (XD) memory), Random Access Memory (RAM), and/or Read Only Memory (ROM) (e.g. Electrically Erasable Programmable ROM (EEPROM)). The image display device 100 may reproduce a file stored in the storage 160 (e.g. a moving picture file, a still image file, a music file, a text file, etc.) and provide the reproduced file to the user.

The controller 180 may provide overall control to the image display device 100. The controller 180 may receive a signal from the remote control device 200 via the interface 150. The controller 180 may identify a command input to the remote control device 200 by the received signal and control the image display device 100 based on the command. For example, upon receipt of a predetermined channel selection command from the user, the controller 180 may control the tuner 111 to provide a selected channel through the signal receiver 110. The controller 180 may control the signal processor 140 to process the audio and video signals of the selected channel. The controller 180 may control the signal processor 140 to output user-selected channel information along with the processed audio and video signals to the display 170 and/or the audio output portion 175.

In another example, the user may enter a different-type video and/or audio output command through the remote control device 200. The user may want to view a video signal of a camera or a camcorder received through the USB receiver 113 rather than a broadcast signal. The controller 180 may control the audio/video processor 101 such that an audio or video signal received through the USB receiver 113 of the signal receiver 110 may be processed by the signal processor 140 and output to the display 170 and/or the audio output portion 175.

Besides a command received through the remote control device 200, the controller 180 may identify a user command received through the local key 155 provided to the image display device 100 and control the image display device 100 based on the user command. For example, the user may enter an on/off command, a channel switch command, a volume change command, and/or the like for the image display device 100 through the local key 155. The user input portion 155 may include buttons and/or keys formed in the image display device 100. The controller 180 may determine whether the local key 155 has been manipulated and control the image display device 100 based on the determination.

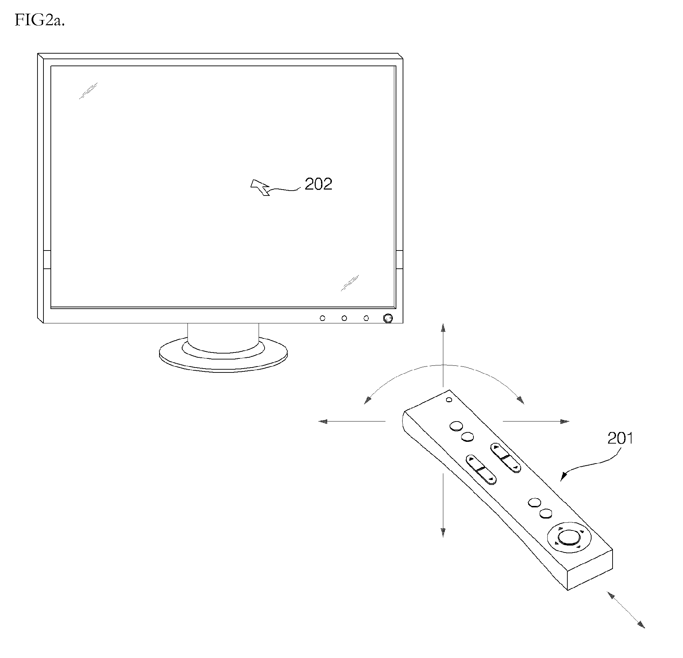

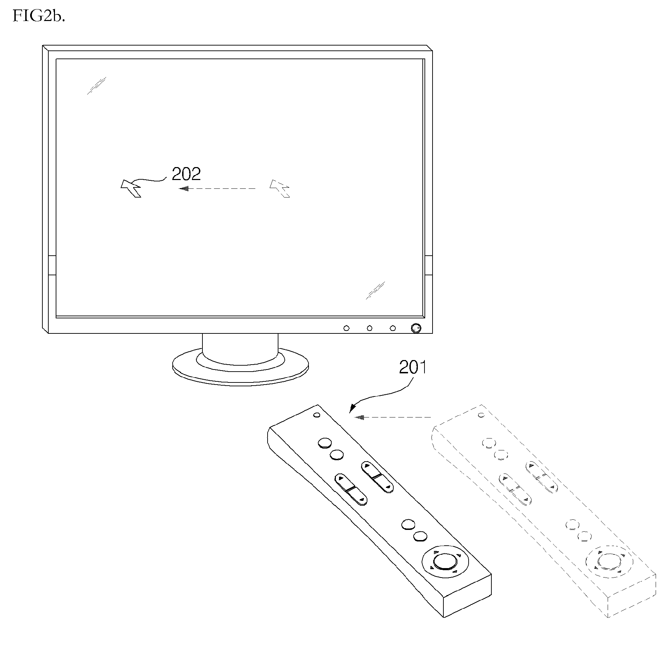

FIGs. 2A and 2B are frontal perspective views of the image display device 100 and a three-dimensional (3D) remote controller 201 for entering a command to the image display device 100 according to an exemplary embodiment of the present invention. Other views, embodiments and configurations are also within the scope of the present invention.

The 3D remote controller 201 may be a kind of the remote control device 200 for entering a command to the image display device 100. The 3D remote controller 201 may also be referred to as a pointing device. The 3D remote controller 201 may be a subscriber unit or a mobile communication terminal. The 3D remote controller 201 may transmit and receive signals to and from the image display device 100 in compliance with an RF communication standard. Referring to FIG. 2A, a pointer 202 corresponding to the 3D remote controller 201 may be displayed on the image display device 100.

The user may move the 3D remote controller 201 up, down, left, right, forward or backward, and/or rotate the 3D remote controller 201. The pointer 202 may move on the image display device 100 in correspondence with movement or rotation of the 3D remote controller 201.

FIG. 2B illustrates movement of the pointer 202 on the image display device 100 based on movement of the remote controller 201. As shown in FIG. 2B, when the user moves the 3D remote controller 201 to the left, the pointer 202 also moves to the left on the image display device 100. The 3D remote controller 201 may also include a sensor for sensing movement of the remote controller 201. Information about movement of the 3D remote controller 201 as sensed by the sensor may be provided to the image display device 100. The image display device 100 may determine movement of the remote controller 201 based on the received information and calculate spatial coordinates of the pointer 202 corresponding to the movement of the remote controller 201.

In FIGs. 2A and 2B, the pointer 202 may move on the image display device 100 in correspondence with an upward, downward, left or right movement and/or rotation of the 3D remote controller 201. Velocity and/or direction of the pointer 200 may correspond to that of the remote controller 201. The pointer 202 may move on the image display device 100 in correspondence with movement of the remote controller 201. Further, a movement of the remote controller 201 may trigger entry of a predetermined command to the image display device 100. That is, if the 3D remote controller 201 moves forward or backward, an image displayed on the image display device 200 may be enlarged or contracted (i.e., reduced).

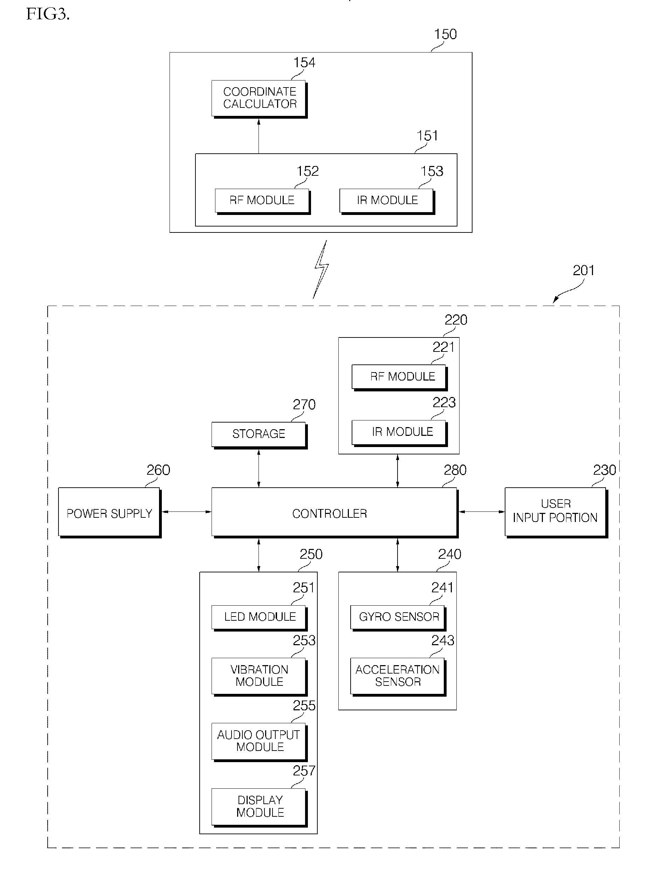

FIG. 3 is a block diagram of the 3D remote controller 201 and the user interface 150 of the image display device 100 according to an exemplary embodiment of the present invention. Other embodiments and configurations are also within the scope of the present invention.

As shown in FIG. 3, the 3D remote controller 201 may include a radio signal transceiver 220, a user input portion 230, a sensor portion 240, an output portion 250, a power supply 260, a storage 270 (or memory) and a controller 280.

The radio signal transceiver 220 may transmit and receive signals to and from the image display device 100. The 3D remote controller 201 may be provided with a radio frequency (RF) module 221 for transmitting and receiving signals to and from the interface 150 of the image display device 100 based on an RF communication standard. The 3D remote controller 201 may include an infrared (IR) module 223 for transmitting and receiving signals to and from the interface 150 of the image display device 100 based on an IR communication standard. Accordingly, the remote controller 201 (or pointing device) may include a first wireless communication module (i.e., the RF module 221) and a second wireless communication module (i.e., the IR module 223).

The 3D remote controller 201 may transmit a signal carrying information about an operation of the 3D remote controller 201 to the image display device 100 through the RF module 221. The 3D remote controller 201 may receive a signal from the image display device 100 through the RF module 221. The 3D remote controller 201 may transmit commands associated with power on/off, channel switching, volume change, etc. to the image display device 100 through the IR module 223.

In one embodiment, the RF module 221 may be used to turn power of the image display (such as a television) either on or off. In another embodiment, the IR module 223 may be used to turn power of the image display device either on or off. In another embodiment, all wireless communication between the remote controller 201 and the image display device may be performed using the IR module 223.

The user input portion 230 may be configured with a keypad and/or buttons. The user may enter a command related to the image display device 100 to the 3D remote controller 201 by manipulating the user input portion 230. If the user input portion 230 includes hard key buttons, the user may enter commands related to the image display device 100 to the 3D remote controller 201 by pushing the hard key buttons. If the user input portion 230 is provided with a touch screen, the user may enter commands related to the image display device 100 to the 3D remote controller 201 by touching soft keys on the touch screen. The user input portion 230 may have a variety of input means the user can manipulate, such as a scroll key, a zog key, etc.

The sensor portion 240 may include a gyro sensor 241 and/or an acceleration sensor 243. The gyro sensor 241 may sense information about an operation of the 3D remote controller 201. For example, the gyro sensor 241 may sense information about an operation of the 3D remote controller 201 along x, y and z axes. The acceleration sensor 243 may sense information about velocity of the 3D remote controller 201.

The output portion 250 may output a video or audio signal corresponding to a manipulation of the user input portion 230 or a signal transmitted by the image display device 100. The user may be aware from the output portion 250 whether the user input portion 230 has been manipulated or the image display device 100 has been controlled.

For example, the output portion 250 may include a Light Emitting Diode (LED) module 251 for illuminating when the user input portion 230 has been manipulated or a signal is transmitted to or received from the image display device 100 through the radio signal transceiver 220, a vibration module 253 for generating vibrations, an audio output module 255 for outputting audio, and/or a display module 257 for outputting video.

The power supply 260 may supply power to the 3D remote controller 201. When the 3D remote controller 201 is kept stationary for a predetermined time period, the power supply 260 may block power (or reduce power) for the 3D remote controller 201. When a predetermined key of the 3D remote controller 201 is manipulated, the power supply 260 may resume power supply.

The storage 270 (or memory) may store a plurality of types of programs required for control or operation of the 3D remote controller 201, and/or application data. When the 3D remote controller 201 wirelessly transmits and receives signals to and from the image display device 100 through the RF module 221, the signal transmission and reception may be carried out in a predetermined frequency band. The controller 280 of the 3D remote controller 201 may store information about the frequency band in which to wirelessly transmit and receive signals to and from the image display device 100 paired with the 3D remote controller 201 and refer to the information.

The controller 280 may provide overall control to the 3D remote controller 201. The controller 280 may transmit a signal corresponding to a predetermined key manipulation on the user input portion 230 or a signal corresponding to an operation of the 3D remote controller 201 sensed by the sensor portion 240 to the interface 150 of the image display device 100 through the radio signal transceiver 220.

The interface 150 of the image display device 100 may have a radio signal transceiver 151 for wirelessly transmitting and receiving signals to and from the 3D remote controller 201, and a coordinate calculator 154 for calculating the coordinates of the pointer corresponding to an operation of the 3D remote controller 210.

The interface 150 may wirelessly transmit and receive signals to and from the 3D remote controller 201 through the RF module 152. The interface 150 may also receive a signal based on the IR communication standard from the 3D remote controller 201 through the IR module 153.

The coordinate calculator 154 may calculate the coordinates (x, y, z) of the pointer 202 to be displayed on the display 170 by correcting handshaking or errors from a signal corresponding to an operation of the 3D remote controller 201 received through the radio signal transceiver 151.

A signal received from the 3D remote controller 201 through the interface 150 may be provided to the controller 180 of the image display device 100. The controller 180 may identify information about an operation of the 3D remote controller 201 or a key manipulation on the 3D remote controller 201 from the received signal and control the image display device 100 based on the information.

In another example, the 3D remote controller 201 may calculate spatial coordinates of the pointer 202 corresponding to its operation and output the coordinates to the interface 150 of the image display device 100. The interface 150 of the image display device 100 may then transmit information about the received coordinates to the controller 180 without correcting handshaking or errors.

FIGs. 1, 2 and 3 illustrate the image display device 100 and the 3D remote controller 201 as the remote control device 200 according to exemplary embodiments. Components of the image display device 100 and the 3D remote controller 201 may be integrated or omitted, and/or other components may be added. That is, when needed, two or more components may be incorporated into a single component or one component may be configured to be divided into two or more separate components. The function of each block is presented for illustrative purposes, and does not limit the scope of the present invention.

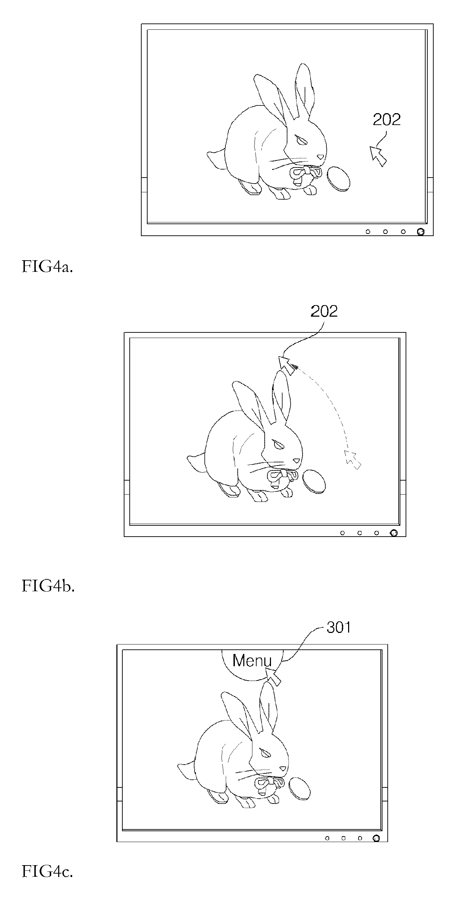

FIGs. 4A to 12 illustrate screens having images displayed on the display according to exemplary embodiments of the present invention. While an exemplary embodiment may be about a method for controlling the image display device 100 by use of the 3D remote controller 201, various types of user input devices for displaying a pointer on the image display device, besides the 3D remote controller 201, may be within the scope of embodiments.

FIGs. 4A, 4B and 4C illustrate screens having images displayed on the display 170 of the image display device 100 according to an exemplary embodiment. When the 3D remote controller 201 points toward the image display device 100, the pointer 202 may be displayed on the screen as shown in FIG. 4A. The image display device 100 may be set to display the pointer 202 when the user moves the 3D remote controller 201 in a predetermined pattern or manipulates a predetermined key of the 3D remote controller 201.

The pointer 202 may move in correspondence with an operation of the 3D remote controller 201. As shown in FIG. 4B, when the user moves the 3D remote controller 201, the pointer 202 moves accordingly. Stated differently, the pointer 202 may move based on movement of the remote controller 201 (or the pointing device).

When the pointer 202 moves to a predetermined area on the display 170, the controller 180 of the image display device 100 may display an object 301 (or information) in a predetermined area, for entering a command to the image display device 100 and/or for representing information related to the image display device 100, as shown in FIG. 4C.

Objects may include various kinds of widgets displayed on the display 170 to enter commands to the image display device 100 and/or may represent information related to the image display device 100. The widgets may be represented as OSD.

The objects may include images and/or text indicating information about the image display device 100 and/or information about an image displayed on the image display device 100 such as audio output (volume) level, channel information, current time, etc. regarding the image display device 100. The objects may be configured in different forms (e.g. moving pictures) based on the types of information displayable or to be displayed on the image display device 100.

In accordance with an exemplary embodiment, an object may be a widget. The widget may be a Graphic User Interface (GUI) component that enables a user to directly change particular data. For example, the widget may be one of a volume control button, a channel selection button, a menu, an icon, a navigation tab, a scroll bar, a progress bar, a text box, a window, etc. displayed on the display 170 of the image display device 100. The type of the widget configured in the image display device 100 may depend on a specification of a GUI that can or should be implemented in the image display device 100, although the scope of the present invention is not limited.

As shown in FIG. 4C, when the pointer 202 moves to a side (i.e., top, bottom, left and/or right) of the display 170, the controller 180 may display the widget 301 for enabling entry of a menu list display command at the side of the display 180. A user interface that displays a widget in a predetermined area to which the pointer 202 moves as shown in FIGs. 4A, 4B and 4C may be referred to as a direct User Interface (UI).

Use of the direct UI may enable the user to enter a command to the image display device 100 without manipulating a button or a key of the 3D remote controller 201. The UI provided as a display area of the pointer 202 may be changed in correspondence with operation of the 3D remote controller 201.

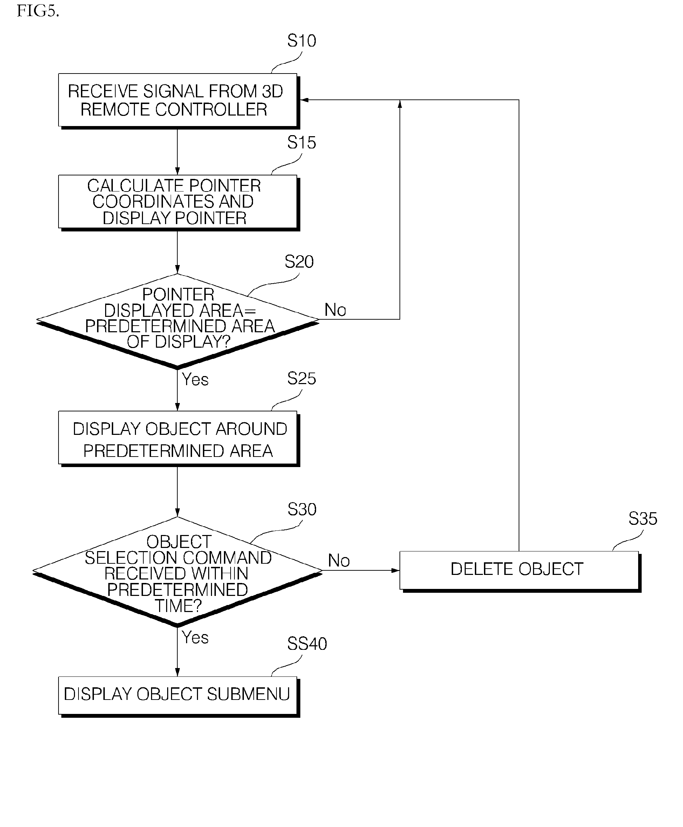

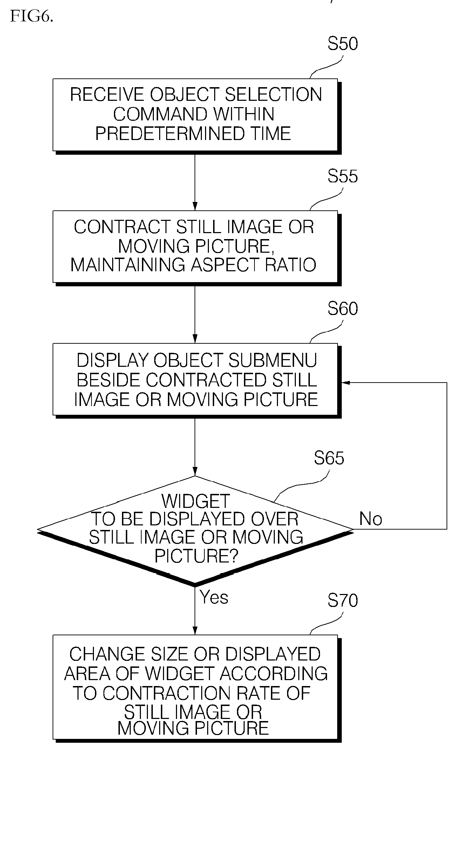

FIGs. 5 and 6 are flowcharts illustrating methods for operating an image display device according to exemplary embodiments of the present invention. Other operations, orders of operations and embodiments are also within the scope of the present invention. In accordance with another exemplary embodiment, the controller 180 of the image display device 100 may invoke the direct UI when the pointer 202 moves to a predetermined area of the display 170. When the direct UI is invoked, the controller 180 of the image display device 100 may change a screen displayed on the display 170 according to implementation of the direct UI in a further exemplary embodiment.

As shown in FIG. 5, the controller 180 may receive a signal from the 3D remote controller 201 in operation S10. The 3D remote controller 201 may transmit the signal to the image display device 100 through the RF module 221. The controller 180 may calculate spatial coordinates at which the pointer 202 is to be displayed on the display 170 based on the received signal. In operation S15, the controller 180 may display the pointer 202 in an area corresponding to the calculated coordinates on the display 170.

The controller 180 may determine whether the displayed area of the pointer 202 is identical to (or corresponds to) a predetermined area of the display 170 in operation S20. The predetermined area of the display 170 may reside at a center of any of upper, lower, left and right sides of the screen of the display 170.

When the pointer 202 moves to an upper center, the lower center, the left center, and/or the right center of the display 170, the controller 180 may display an object (or information) in operation S25. For example, as shown in FIGs. 4A, 4B and 4C, when the pointer 202 moves toward the upper center on the display 170, the controller 180 may display a widget (or information) for entering a menu list display command at the upper center.

After displaying the object (or information) on the display 170, the controller 180 may monitor receipt of an object selection command for a predetermined time in operation S30. The object selection command may be entered to the image display device 100 when a predetermined button or key corresponding to the object selection command is manipulated in the 3D remote controller 201 or when the user moves the 3D remote controller 201 in a predetermined pattern corresponding to the object selection command.

If the controller 180 has not received the object selection command for the predetermined time, the controller 180 deletes, removes or fails to display the object (or information) from the display 170 in operation S35. On the other hand, upon receipt of the object selection command for the predetermined time, the controller 180 may display a submenu related to the object (i.e., an object submenu) or the information on the display 170 in operation S40.

The controller 180 may semi-transparently display the object (or the information) or the object submenu on the display 170. When displaying the object or the object submenu on the display 170, the controller 180 may adjust a size of a still image and/or a moving picture that is being displayed.

FIG. 6 is a flowchart illustrating a method for adjusting a size of a still image and/or a moving picture that is being displayed on the display 170 when the controller 180 displays an object (or information) submenu on the display 170.

As shown in FIG 6, upon receipt of an object selection command for an object displayed on the display 170 for a predetermined time in operation S50, the controller 180 may contract (or reduce) an on-going still image or moving picture on the display 170 in operation S55. When contracting the still image or the moving picture, the controller 180 may maintain an aspect ratio of the still image or the moving picture.

In operation S60, the controller 180 may display a submenu for the selected object at a side of the contracted still image or moving picture. The controller 180 may provide the object submenu beside the contracted still image or moving picture such that the object submenu does not overlap the still image or the moving picture. The controller 180 may semi-transparently display the object or the object submenu. In this case, the user may recognize the object or the object submenu together with the still image or the moving picture without the need for contracting the still image or the moving picture.

In operation S65, the controller 180 may display a widget over the on-going still image or moving picture. In this case, the controller 180 may change the size of the widget or an area where the widget is displayed based on a contraction rate of the still image or the moving picture.

For example, when the still image or the moving picture is contracted, the controller 180 may decrease the size of the widget based on the contraction rate of the still image or the moving picture. In another example, when the still image or the moving picture is contracted, the controller 180 may move the widget to an area that does not hinder viewing of the contracted still image or moving picture.

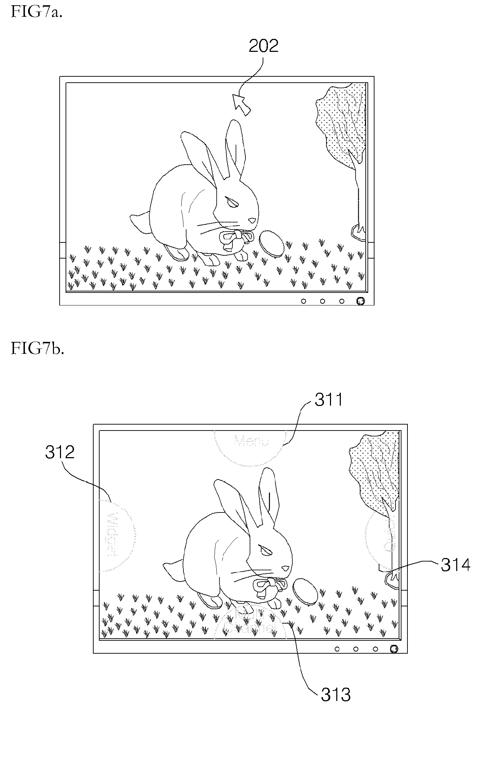

FIGs. 7A to 12B illustrate screens having images displayed on the display 170 of the image display device 100.

FIGs. 7A and 7B illustrate screens having images displayed on the display 170 of the image display device 100 according to an exemplary embodiment of the present invention. Other screens, embodiments and configurations are also within the scope of the present invention.

As shown in FIG. 7A, the controller 180 may display the pointer 202 that moves based on operation of the 3D remote controller 201 on the display 170. The controller 180 may change a displayed area of the pointer 202 in correspondence with operation of the 3D remote controller 201.

When the pointer 202 moves to the center of the upper, lower, left or right side of the display 170, the controller 180 may display an object at the center of the side to which the pointer 202 has moved. For example and as shown in FIG. 7B, the controller 180 may display a menu list display command widget 311, a widget list display command widget 312, a video channel list display command widget 313 and/or a short menu display command widget 314 on the display 170.

As shown in FIG. 7B, the controller 180 may semi-transparently display the widgets 311 to 314. Therefore, the user may view a still image or a moving picture being displayed on the display 170 even though the widgets 311 to 314 are displayed on the display 170.

In another example, the controller 180 may display widgets, one by one, corresponding to areas to which the pointer 202 has moved on the display 170. That is, when the pointer 202 moves to the upper center, the menu list display command widget 311 may be displayed. When the pointer 202 moves to the left center, the widget list display command widget 312 may be displayed. When the pointer 202 moves to the lower center, the video channel list display command widget 313 may be displayed. When the pointer 202 moves to the right center, the short menu list display command widget 314 may be displayed.

When the pointer 202 moves to at least one of the upper, lower, left and right centers, the controller 180 may display all of the widgets 311 to 314 on the display 170 at a same time.

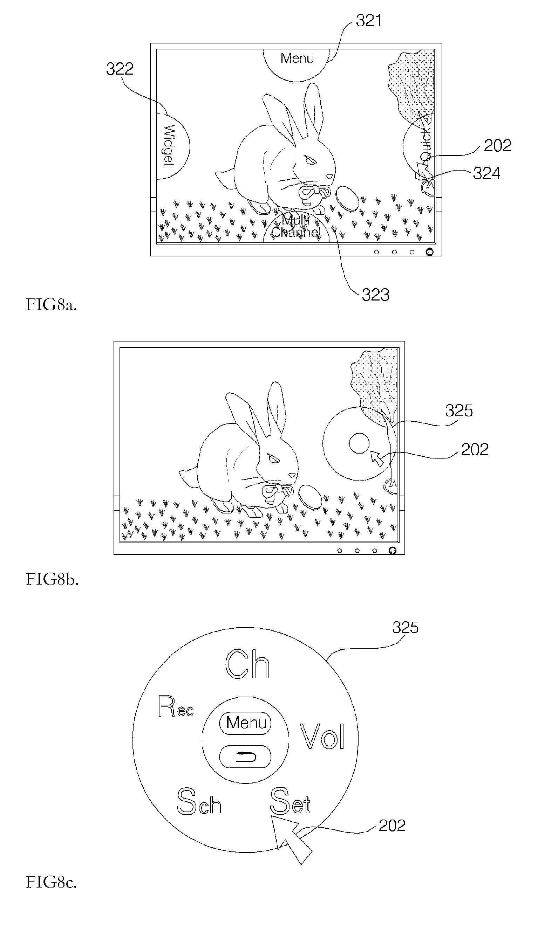

FIGs. 8A to 9B illustrate screens having images displayed on the display 170 of the image display device 100 according to exemplary embodiments of the present invention. Other screens, embodiments and configurations are also within the scope of the present invention.

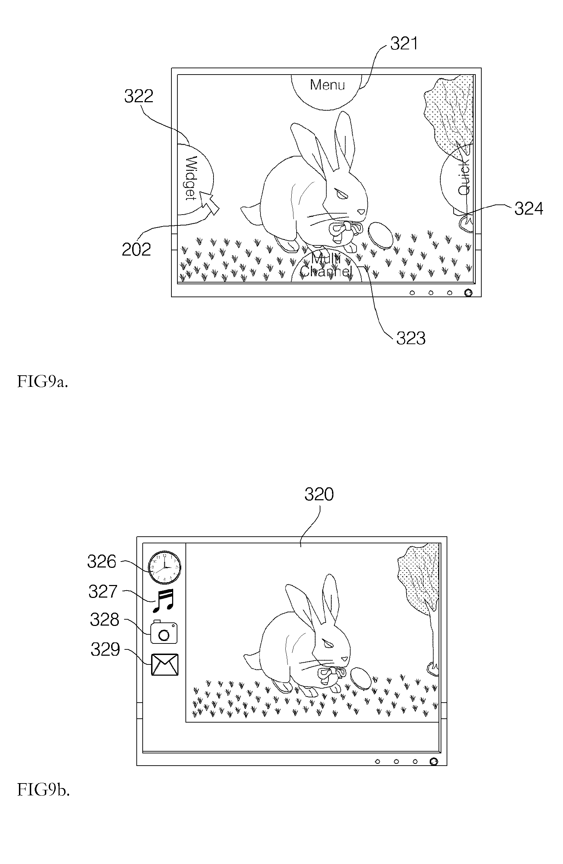

In accordance with the exemplary embodiment, upon receipt of an object selection command, the controller 180 may semi-transparently display an object submenu (or information submenu) on the display 170, as shown in FIG. 8B. In accordance with the another exemplary embodiment, upon receipt of an object selection command, the controller 180 may display an object submenu (or information submenu) on one side of a contracted still image or moving picture, as shown in FIG. 9B.

As shown in FIG. 8A, when the pointer 202 moves to a predetermined area on the display 170, the controller 180 may display a menu list display command widget 321, a widget list display command 322, a video channel list display command 323, and a short menu display command 324. When the pointer 202 is positioned at the short menu display command widget 324, the user may enter a short menu display command to the image display device 100 by selecting a predetermined key of the 3D remote controller 201.

The image display device 100 may then display a short menu list widget 325, which is a submenu of the short menu display command widget 324, on the display 170 in response to the short menu display command, as shown in FIG. 8B. In accordance with the exemplary embodiment, the controller 180 may semi-transparently display a submenu for a widget for which a selection command has been received in the display area of the widget. Therefore, the user may view an on-going still image or moving picture on the display 170 with the submenu displayed.

FIG. 8C illustrates an enlarged version of the short menu list widget 325. As shown in FIG. 8C, the short menu list widget 325 may include a volume menu item, a display environment setting menu item, a schedule menu item and/or a channel recording menu item. The user may select an intended menu item using the pointer 202 corresponding to the 3D remote controller 201.

The menu items shown in FIG. 8C are shown according to an exemplary embodiment. A user may add or delete menu items to or from the short menu list widget 325.

As shown in FIG. 9A, the user may select the widget list display command widget 322 from among the widgets 321 to 324 in the direct UI. When the widget list display command widget 322 is displayed, the user may enter a command for selecting the widget list display command widget 322 to the image display device 100 by manipulating a predetermined key of the 3D remote controller 201.

Upon receipt of the widget selection command, the controller 180 may contract (or reduce) an on-going moving picture 320 on the display 170 and display a widget list on the left side of the contracted moving picture 320, as shown in FIG. 9B.

The widget list may include a current time display command icon 326, a music play command icon 327, an album display command icon 328 and/or an e-mail check command icon 329. The user may add or delete an icon to or from the widget list.

Upon selection of the current time display command icon 326, the controller 180 may display the current time on the display 170. Upon selection of the music play command icon 327, the controller 180 may play music-related moving pictures and/or audio stored in the image display device 100. The controller 180 may display video of a music channel on the display 170. Upon selection of the album display command icon 328, the controller 180 may display an album stored in the image display device 100 in still images. The controller 180 may display an album stored in an external device connected by a USB or Bluetooth communication standard on the display 170. Upon selection of the e-mail check command icon 329, the controller 180 may wirelessly or wiredly access the Internet and display a user mail box on the display 170.

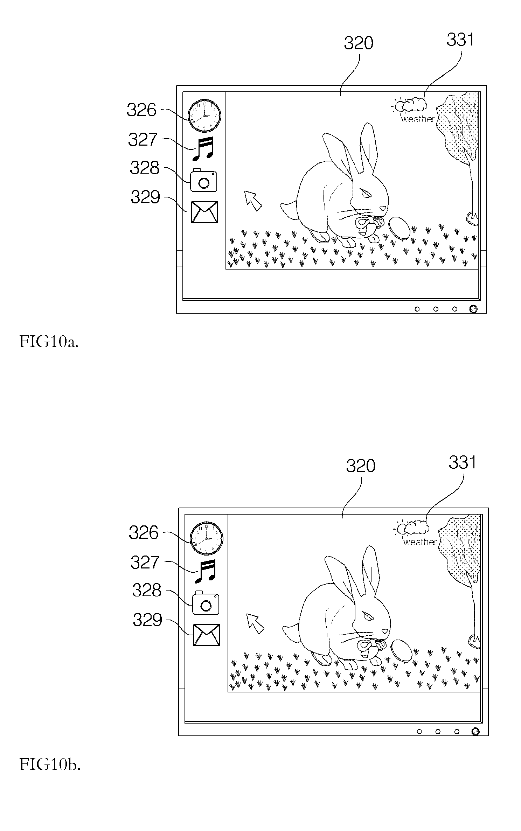

FIGS. 10A and 10B illustrate screens having images displayed on the image display device 100 according to an exemplary embodiment of the present invention. Other screens, embodiments and configurations are also within the scope of the present invention. In FIGS. 10A and 10B, widgets are displayed on the display 170 of the image display device 100 before the direct UI is implemented.

As shown in FIG. 10A, when the pointer 202 moves to the left center of the display 170, the direct UI is implemented and the widgets 321 to 324 may be displayed on the display 170. The controller 180 may display a widget 331 for providing weather information on the display 170. The user may select the type of the widget 331 that is overlaid over the image 320 displayed on the display 170. For example, the user may semi-transparently display stock information over the image 320. In another example, the user may semi-transparently display schedule information over the image 320.

Upon user selection of the widget list display command widget 322, the controller 180 may display a widget list listing icons 326 to 329 on the display 170, as shown in FIG. 10B. The controller 180 may contract (or reduce) the moving picture 320, and thereby display the widget list. The controller 180 may contract the widget 331 overlaid on the moving picture 320 at the contraction rate of the moving picture 320. In another example, the controller 180 may only move the widget 331 to another area without changing the size of the widget 331.

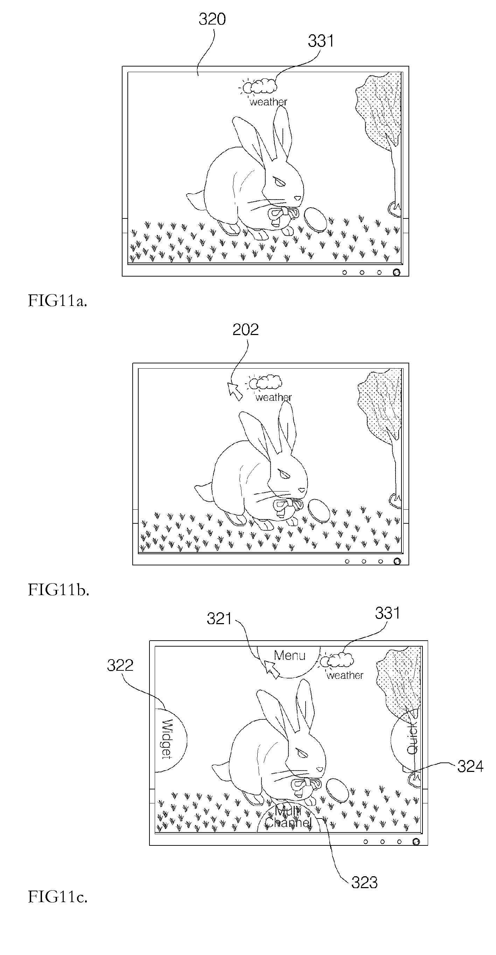

FIGs. 11A, 11B and 11C illustrate screens having images displayed on the display 170 of the image display device 100 according to an exemplary embodiment of the present invention. Other screens, embodiments and configurations are also within the scope of the present invention. In accordance with the exemplary embodiment, the controller 180 may change the displayed area of the widget 331 so as to avoid overlap between the widget 331 and the widgets 321 to 324 of the direct UI.

As shown in FIG. 11A, the controller 180 may display the widget 331 over the image 320 displayed on the display 170. The user may manipulate the 3D remote controller 201 to move the pointer 202 to the upper center of the display 190, as shown in FIG. 11B.

The controller 180 may implement the direct UI along with movement of the pointer 202. As shown in FIG. 11C, the controller 180 may display the widgets 321 to 324 on the display 170. The menu list display command widget 321 may overlap with the widget 331. Thus, the controller 180 may move the widget 331 over the image 320 to the right to avoid the overlap. In another example, the controller 180 may move the menu list display command widget 321 to the left.

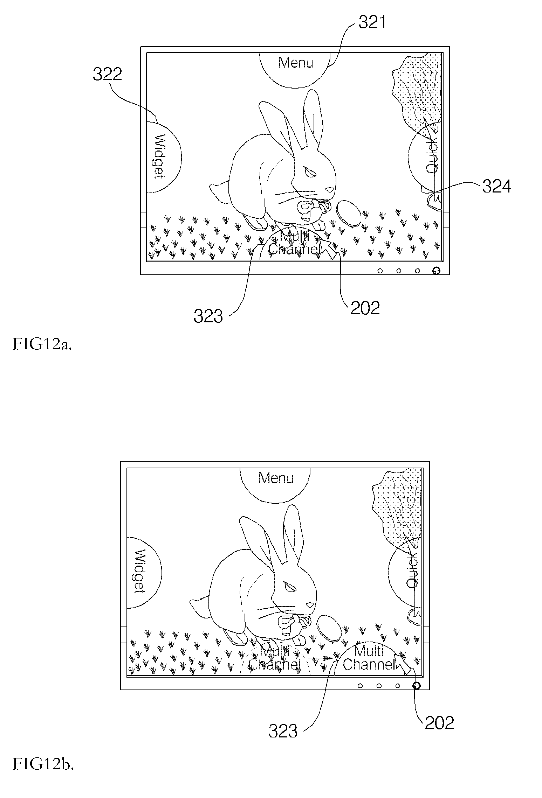

FIGs. 12A and 12B illustrate screens having images displayed on the display 170 of the image display device 100 according to an exemplary embodiment of the present invention. Other screens, embodiments and configurations are also within the scope of the present invention. In accordance with the exemplary embodiment, the controller 180 may move the widgets 321 to 324 of the direct UI.

As shown in FIG. 12A, when the pointer 202 moves to the lower center of the display 170, the controller 180 may display the widgets 321 to 324 on the display 170. When the pointer 202 is at the video channel list widget 323, the user may select the video channel list widget 323 by manipulating a predetermined key (or button) of the 3D remote controller 201 and then move the pointer 202 to the right.

As shown in FIG. 12B, the controller 180 may move the video channel list widget 323 to the right. The controller 180 may render the video channel list widget 323 semi-transparent or opaque. The user may set the transparency, display areas, etc. of the widgets of the direct UI.

Embodiments of the present invention may readily control an image display device using a pointer that moves in correspondence with an operation of a 3D remote controller. Embodiments may obviate the need for a user's manipulation of a button on the 3D remote controller to enter a command. The image display device may recognize a user command based on a movement of the 3D remote controller and operate based on the user command.

Embodiments of the present invention may provide an image display device readily controllable by use of a 3D remote controller and an operation method thereof.

Embodiments may provide an image display device for displaying a pointer in correspondence with an operation of a 3D remote controller to which a user interface for conveniently controlling the image display device using the pointer is applied, and an operation method thereof.

A method may be provided for operating an image display device that includes displaying an image on a display, displaying a pointer that moves in correspondence with an operation of a 3D remote controller (or pointing device) on the display, and displaying an object for receiving a command or representing image display device-related information on the display when the pointer moves to a predetermined area of the display.

An image display device may be provided that includes a display for displaying an image, and a controller for displaying a pointer that moves in correspondence with operation of a 3D remote controller on the display, and for displaying an object for receiving a command or representing image display device-related information on the display when the pointer moves to a predetermined area of the display.

It will be appreciated by persons skilled in the art that the image display device and the operation method thereof according to the present invention are not limited to what has been particularly shown and described hereinabove. Rather the scope of the present invention includes both combinations and subcombinations of the various features described hereinabove as well as variations and modifications thereof which would occur to persons skilled in the art upon reading the foregoing description.

Exemplary embodiments of the present invention can also be embodied as processor-readable codes on a processor-readable recording medium provided in an image display device. The processor-readable recording medium is any data storage device that can store data which can thereafter be read by a process. Examples of the processor-readable recording medium include, but are not limited to, optical data storages such as ROM, RAM, CD-ROMs, magnetic tapes, floppy disks, optical data storage devices, and carrier waves (such as data transmission through the Internet via wired or wireless transmission paths). The processor-readable recording medium can also be distributed over network-coupled computer systems so that the processor-readable code is stored and executed in a distributed fashion.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for operating an image display device, comprising:
displaying an image on a display;
displaying a pointer on the display that moves based on movement of a pointing device; and
displaying an object or information when the pointer is moved to a predetermined area of the display.

2. The method according to claim 1, wherein displaying the object or the information comprises displaying the object or the information at the predetermined area of the display to which the pointer has moved or in a vicinity of the predetermined area.

3. The method according to claim 1, wherein the object or the information is a widget.

4. The method according to claim 1, wherein displaying the object or the information comprises transparently displaying the object or the information in a vicinity of the predetermined area.

5. The method according to claim 1, further comprising:
displaying a submenu of the object or the information transparently on the display, or contracting the image and displaying the submenu of the object or the information outside the contracted image upon receipt of a command for selecting the object or the information.

6. The method according to claim 5, further comprising:
displaying a widget over the image; and
changing a size of the widget or a display area of the widget based on a contraction rate of the image.

7. The method according to claim 5, further comprising:
removing the displayed object or the displayed information from the display when the command for selecting the object or the information has not been received for a predetermined time.

8. The method according to claim 1, further comprising:
displaying a widget over the image, and
wherein displaying the object or the information comprises changing a display area of the object or the information or a display area of the widget when the display area of the object or the information overlaps with the display area of the widget.

9. The method according to claim 1, wherein the object or the information is a widget for receiving at least one of a menu list display command, a widget list display command, a video channel list display command or a short menu display command.

10. The method according to claim 1, further comprising:
changing a display area of the object or the information upon receipt of a command for changing the display area of the object or the information.

11. The method according to claim 1, wherein the object is an object for controlling an operation of the television when the pointer is moved to a predetermined location of the display.

12. The method according to claim 1, wherein the pointing device having a first wireless communication module and a second wireless communication module.

13. The method according to claim 1, wherein the pointing device having an infrared (IR) module.

14. An image display device comprising:
a display for displaying an image; and
a controller for displaying a pointer that moves based on movement of a pointing device having a first wireless communication module and a second wireless communication module, and the controller for displaying an object or information when the pointer moves to a predetermined area of the display.

15. The image display device according to claim 14, wherein said units are further configured to carry out a method as claimed in any one of claims 2 to 13.

## Amended claims

### Amended claims in accordance with Rule 137(2) EPC.

**1.** A method for operating an image display device (100), comprising:
displaying an image (320) on a display (170);
displaying a pointer (202) on the display that moves based on movement of a pointing device (200; 201); and
displaying an object (301; 311-314; 321-324)or information when the pointer is moved to a predetermined area of the display; and
displaying a submenu (325; 326-329) of the object or the information transparently on the display, or contracting the image and displaying the submenu of the object or the information outside the contracted image upon receipt of a command for selecting the object or the information,
wherein the object or information is a GUI image regarding the display device or the image currently displaying, and the object or information disappears when the pointer is moved out of the predetermined area of the display.

**2.** The method according to claim 1, wherein displaying the object (301; 311-314; 321-324) or the information comprises displaying the object or the information at the predetermined area of the display (170) to which the pointer (202) has moved or in a vicinity of the predetermined area.

**3.** The method according to claim 1, wherein the Information is one of an audio output level, a channel information, a current time and the object is one of a volume control button, a channel selection button, a menu, an icon, a navigation tab, a scroll bar, a progress bar, a text box, a window.

**4.** The method according to claim 1, wherein displaying the object (311-314) or the information comprises transparently displaying the object or the information in a vicinity of the predetermined area.

**5.** The method according to claim 1, further comprising:
displaying the GUI image over the image; and
changing a size of the GUI image or a display area of the GUI image based on a contraction rate of the image.

**6.** The method according to claim 1, further comprising:
removing the displayed object or the displayed information from the display when the command for selecting the object or the information has not been received for a predetermined time.

**7.** The method according to claim 1, further comprising:
displaying the GUI image over the image, and
wherein displaying the object or the information comprises changing a display area of the object or the information or a display area of the GUI image when the display area of the object or the information overlaps with the display area of the GUI image.

**8.** The method according to claim 1, wherein the object or the information is the GUI image for receiving at least one of a menu list display command, the GUI image list display command, a video channel list display command or a short menu display command.

**9.** The method according to claim 1, further comprising:
changing a display area of the object or the information upon receipt of a command for changing the display area of the object or the information.

**10.** The method according to claim 1, wherein the object is an object for controlling an operation of the television when the pointer is moved to a predetermined location of the display.

**11.** The method according to claim 1, wherein the pointing device having a first wireless communication module and a second wireless communication module.

**12.** The method according to claim 1, wherein the pointing device having an infrared (IR) module

**13.** An image display device comprising:
a display (100) for displaying an image (320); and
a controller (180) for displaying a pointer (202) that moves based on movement of a pointing device (200; 201); and
an interface (150) receiving a command for selecting the object or the information,
wherein the controller (180) for displaying displays an object or information when the pointer (202) moves to a predetermined area of the display, and the object or information disappears when the pointer is moved out of the predetermined area of the display,
and the object or information is a GUI image regarding the display device or the image currently displaying,
and the display displays a submenu (325; 326-329) of the object or the information transparently on the display, or contracting the image and displaying the submenu of the object or the information outside the contracted image upon receipt of a command for selecting the object or the information

**14.** The image display device according to claim 13, wherein said units are further configured to carry out a method as claimed in any one of claims 2 to 12.
